# DEMANDE DE BREVET EUROPEEN

(11) **EP 0 658 989 A1**
(43) Date de publication de la demande: **21.06.1995**
(21) Numéro de dépôt: 94402855.4
(22) Date de dépôt: 12.12.1994
(51) Int. Cl.: H04H 1/00, H04H 9/00, H04J 1/14, H04J 3/00

(54) **Dispositif de multiplexage fréquentiel d'un signal de données et d'un signal sonore**

(30) Priorité: 14.12.1993 FR 9315002
(71) Demandeur: TELEDIFFUSION DE FRANCE, société anonyme, F-75015 Paris (FR)
(72) Inventeur: Bourcet, Patrice, F-57070 Mey (FR); Masse, Denis, F-57780 Rosselange (FR)
(74) Mandataire: Cabinet Martinet & Lapoux

(57) **Abrégé**

L'invention concerne un procédé de multiplexage fréquentiel d'un signal sonore (SON) établi dans une bande de fréquence donnée (fₘ, f_{M}) et d'un signal de données (DATA) établi dans une première portion (f_{D1}, f_{D2}) incluse dans ladite bande de fréquence donnée (fₘ, f_{M}). Le procédé comprend la mesure de la puissance du signal sonore (SON) dans une seconde portion (f_{M1}, f_{M2}) incluse dans la bande de fréquence donnée (fₘ, f_{M}) et distincte de ladite première portion (f_{D1}, f_{D2}), le multiplexage fréquentiel du signal de données (DATA) avec le signal sonore (SON) lorsque la puissance mesurée (SM) est supérieure à un seuil, et ou bien la transmission du signal multiplexé (SDS) lorsque la puissance mesurée (SM) est supérieure audit seuil, ou bien la transmission du signal sonore (SON) lorsque la puissance mesurée est inférieure audit seuil. Le signal de données ainsi transmis est suffisamment inaudible pour qu'il soit traité directement en sortie d'un haut-parleur ou d'une prise de son ou de péritélévision.

## Description

La présente invention concerne un dispositif de multiplexage fréquentiel d'un signal de données et d'un signal sonore. Le signal de données après avoir été modulé et multiplexé au signal sonore est radiodiffusé par un émetteur dans la bande des fréquences audibles pour être traité après démodulation dans un récepteur accordé sur la bande de ces fréquences audibles.

L'invention trouve application notamment dans les techniques de simulation d'interactivité entre un auditeur, ou téléspectateur, et un programme sonore, qu'il soit diffusé par un poste de radio ou un poste de télévision. Dans de telles applications, l'usager, auditeur ou téléspectateur, possède une console comprenant en outre un clavier, une unité d'affichage, et un récepteur destiné à recevoir et extraire le signal de données qui est multiplexé avec le signal sonore. L'information utile incluse dans le signal de données est bien souvent associée au contenu du signal sonore avec lequel il est multiplexé, ou du signal d'image accompagnant ce signal sonore. L'interactivité peut consister en un jeu de questions/réponses pour lequel l'usager est invité à répondre à une série de questions qu'il lit sur l'écran de son poste de télévision, ou écoute de celui-ci ou de son poste de radio. Les questions et les réponses correctes à ces questions sont transmises, sous forme codée, dans le signal de données qui est multiplexé au signal sonore. La simulation d'interactivité consiste alors à comparer, dans une unité de traitement de la console, les réponses saisies par l'usager, au moyen de son clavier et les réponses correctes transmises dans le signal de données, et à afficher les résultats de ces comparaisons sur l'unité d'affichage pour informer l'usager de la validité de ses réponses.

L'invention peut également être appliquée à la transmission d'informations supplémentaires à l'usager. Par exemple, dans une application de radiodiffusion sonore, le signal de données contient des informations relatives au nom de la station sélectionnée, au type de programme, au titre et à l'auteur d'une mélodie, etc... qui sont affichées sur une unité d'affichage du poste de radio.

Dans la technique antérieure sont connus deux types de multiplexage fréquentiel d'un signal de données avec un signal sonore pour de telles applications.

Un premier type de multiplexage consiste à transmettre le signal de données dans une bande de fréquence contiguë à et distincte de la bande de fréquence allouée au signal sonore. A titre d'exemple, pour la transmission d'informations supplémentaires en radiodiffusion sonore par modulation de fréquence (radio FM) à travers un canal donné dans la bande de fréquence (0 Hz ; 76 kHz), la bande de fréquence (0 Hz ; 54 kHz) est allouée au signal sonore et la bande de fréquence (54 kHz ; 76 kHz) est allouée en permanence au signal de données. La bande de fréquence (0 Hz ; 54 kHz) est suffisamment large pour assurer une restitution de qualité acceptable du signal sonore par un poste récepteur. En amont du ou en entrée dans le poste récepteur sont séparés le signal de données et le signal sonore avant diffusion acoustique vers l'usager. Ainsi, le signal de données n'est pas reproduit par un haut-parleur du poste de radio sous forme d'un son audible pour ne pas perturber l'audibilité du signal sonore. Contrairement à la démarche commerciale ciblée ayant guidée la conception de tels postes de radio haut de gamme à affichage de données supplémentaires, une banalisation des applications de simulation d'interactivité ou de transmission d'informations supplémentaires au parc existant de postes de radio ou de télévision ne peut se baser sur une telle technique de multiplexage. En effet, cette technique est coûteuse en raison d'un circuit additionnel dans le poste pour séparer le signal de données et le signal sonore. En outre, ce premier type de multiplexage se heurte à la saturation des ressources de radiofréquence disponibles.

Un second type de multiplexage consiste à multiplexer le signal de données dans la bande de fréquence allouée au signal sonore. Dans ce cas, le signal de données est transmis indépendamment du contenu spectral du signal sonore, et est donc audible par l'usager. Ce second type de multiplexage remédie au surcoût de la réalisation selon le premier type de multiplexage connu. En contrepartie, l'audibilité du signal de données par l'usager s'avère gênante, ce qui implique de réduire au minimum la quantité des informations de données transmises et donc le débit de celles-ci. Ce second type de multiplexage n'est donc pas optimal au regard de la capacité de transmission d'information, critère principal pour la mise en oeuvre d'un système interactif efficace.

L'invention vise à remédier aux inconvénients précités de la technique antérieure en fournissant un dispositif de multiplexage fréquentiel d'un signal de données et d'un signal sonore dans lesquels le signal de données diffusé est suffisamment inaudible pour qu'il soit traité directement en sortie d'un haut-parleur ou d'une prise de son ou de péritélévision, sans devoir être séparé du signal sonore par un dispositif additionnel dans le poste récepteur.

A cette fin, un dispositif de multiplexage fréquentiel recevant un signal sonore établi dans une bande de fréquence donnée et un signal de données, comprenant
un filtre coupe-bande pour filtrer ledit signal sonore dans une portion de ladite bande de fréquence donnée complémentaire à une première portion dans ladite bande de fréquence donnée de manière à fournir un signal sonore filtré,
un moyen de mesure pour mesurer une puissance du signal sonore dans une seconde portion incluse dans la bande de fréquence donnée et distincte de ladite première portion de manière à fournir un signal de mesure proportionnel à la puissance mesurée tant que la puissance mesurée est supérieure à un seuil,
un moyen de modulation commandé par ledit moyen de mesure pour moduler en fréquence ledit signal de données dans ladite première portion de bande de fréquence, en réponse au signal de mesure, et
un moyen pour additionner le signal sonore filtré dans le filtre coupe-bande et le signal de données modulé dans le moyen de modulation en un signal multiplex,
est caractérisé en ce qu'il comprend
un moyen commandé par le moyen de mesure pour sélectionner et transmettre en tant que signal résultant, le signal multiplex en réponse au signal de mesure et le signal sonore lorsque la puissance mesurée est inférieure audit seuil.

Sachant que la puissance spectrale mesurée fluctue, il convient d'une part d'organiser une transmission asynchrone des données, d'autre part d'assurer celle-ci avec une puissance instantanée suffisante du signal de données sans que celui-ci soit audible. Ainsi, selon l'invention, lorsque la puissance mesurée est supérieure au seuil, ledit signal de données à multiplexer au signal sonore est structuré en trames, chacune des trames ayant une durée sensiblement égale à la différence entre deux instants successifs entre lesquels la puissance mesurée est supérieure au seuil, et étant transmise dans ladite première portion de bande de fréquence avec une puissance instantanée qui dépend de ladite puissance mesurée du signal sonore. De préférence, la puissance instantanée du signal de données dans le signal multiplex varie proportionnellement à la puissance mesurée.

En pratique, le signal de données est un signal numérique qui, préalablement au multiplexage avec ledit signal sonore, est modulé en fréquence. Egalement, préalablement au multiplexage fréquentiel, le signal sonore est filtré dans une portion complémentaire à ladite première portion dans la bande de fréquence donnée.

Pour satisfaire au phénomène de masquage auditif dans l'oreille humaine, la seconde portion de ladite bande de fréquence sonore est inférieure et immédiatement adjacente à ladite première portion.

Pour la réalisation relative à la transmission du signal de données sous forme de trames, le dispositif comprend en outre
un moyen commandé par le moyen de mesure pour mettre en forme ledit signal de données en des trames de bit encadrées par des mots de début et de fin de trame sensiblement en réponse au signal de mesure, chacune des trames ayant une durée sensiblement égale à la différence entre deux instants successifs entre lesquels la puissance mesurée est supérieure au seuil,
et
un moyen de contrôle de gain commandé par le moyen de mesure pour faire varier la puissance instantanée des trames à moduler en fréquence dans le moyen de modulation en proportion du niveau du signal de mesure.

Avantageusement, le moyen de mesure comprend
un moyen pour filtrer ledit signal sonore dans ladite seconde portion de la bande de fréquence donnée, et
un moyen pour mesurer la puissance spectrale instantanée dudit signal sonore filtré dans ladite seconde portion de bande de fréquence.

Un tel dispositif de multiplexage est introduit dans une station de radiodiffusion ou télédiffusion, ou dans une station de production. Le signal résultant comprenant le son et les données asynchrones est par exemple diffusé par voie hertzienne vers des postes de radio ou de télévision chez des auditeurs et téléspectateurs.

A cette fin, l'invention prévoit un système de restitution de données selon deux variantes.

Selon une première variante, un système pour restituer des données incluses dans un signal résultant diffusé acoustiquement produit par un dispositif de multiplexage fréquentiel selon l'invention, comprend un moyen acousto-électrique pour transformer ledit signal résultant diffusé acoustiquement en un signal électrique résultant, et un moyen pour détecter ledit signal de données dans ledit signal électrique résultant afin d'en extraire des données restituées. Le système peut comprendre un moyen d'amplification à commande automatique de gain associé au moyen acousto-électrique et précédant le moyen pour détecter.

Selon une seconde variante, un système pour restituer des données dans un signal résultant produit par un dispositif de multiplexage fréquentiel conforme à l'invention, et associé à un signal d'image en un signal audiovisuel capté par un moyen récepteur, comprend
un moyen pour récupérer un signal sonore contenu dans le signal audiovisuel capté et reproduit en bande de base par le moyen récepteur en le signal résultant, et
un moyen pour détecter le signal de données dans le signal résultant récupéré afin d'en extraire des données restituées.

Un tel système de restitution est combiné avec une console de simulation d'interactivité reliée par voie radio ou voie infrarouge au système de restitution, pour recevoir les données restituées. Selon l'invention, la console comprend un clavier pour saisir des réponses d'usager téléspectateur ou auditeur, et une unité de traitement et d'affichage pour comparer les réponses saisies et les données restituées reçues, et afficher des résultats de comparaisons entre réponses et données.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un diagramme montrant le spectre d'un signal audiovisuel pour un canal de télédiffusion donné ;
- la figure 2 est un bloc-diagramme schématique des étapes de multiplexage fréquentiel d'un signal de données et d'un signal sonore dans le domaine audiovisuel ;
- la figure 3 est un bloc-diagramme d'un dispositif de multiplexage fréquentiel d'un signal de données et d'un signal sonore selon l'invention ;
- la figure 4 est un diagramme de répartition de fréquences caractéristiques dans une bande de fréquence sonore, relative au fonctionnement du dispositif de multiplexage fréquentiel ;
- les figures 5A et 5B sont respectivement des blocs-diagrammes d'un dispositif de restitution et d'émission de données associé à un poste récepteur, et d'une console d'usager pour simulation d'interactivité avec un programme sonore ou audiovisuel diffusé par le poste récepteur ;
- la figure 6 est un bloc-diagramme d'un dispositif de détection de données inclus dans le dispositif de restitution et d'émission de données montré à la figure 5A ; et
- les figures 7A et 7B sont respectivement des blocs-diagrammes d'émetteur et récepteur à haute-fréquence inclus dans le dispositif de restitution et d'émission de données de la figure 5A et dans la console de la figure 5B.

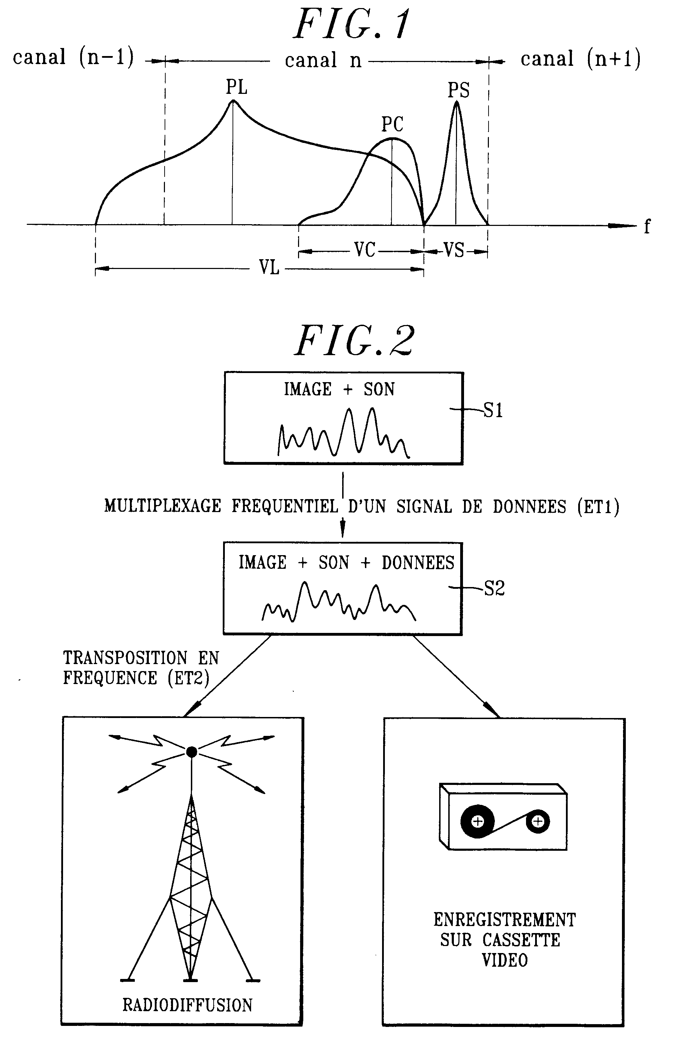

En référence à la figure 1, le spectre d'un signal audiovisuel, relatif à un codage de type PAL ou SECAM du signal d'image, consiste en une voie de liminance VL, une voie de chrominance VC et une voie sonore VS toutes trois multiplexées et respectivement associées à une porteuse de luminance PL, une porteuse de chrominance PC et une porteuse sonore PS. Ces porteuses PL, PC et PS sont destinées, pour les besoins de la télédiffusion, à transposer les signaux initiaux de luminance, chrominance et sonore en bande de base à des fréquences appartenant à une bande de fréquence ou canal donnée, ici de rang n, associé à un programme audiovisuel d'une chaîne de télévision donnée.

Comme montré dans la figure 2, une étape ET1 relative au multiplexage fréquentiel d'un signal de données avec un signal sonore est opérée sur le signal audiovisuel S1 en bande de base pour produire un signal multiplexé S2 comprenant une bande de fréquence de signal d'image et une bande de fréquence de signal sonore multiplexé avec le signal de données. Ce multiplexage est réalisé avant une transposition en fréquence ET2 dans le cas d'une radiodiffusion, ou avant enregistrement de vidéocassettes destinées à la commercialisation. L'étape de multiplexage ET1 est ainsi mise en oeuvre dans une régie finale de radiodiffusion ou de télédiffusion, ou encore dans un studio de production.

Selon l'invention, le signal de données est transmis dans une première portion de la bande de fréquence du signal sonore lorsque le contenu spectral d'une seconde portion de ladite bande de fréquence du signal sonore, qui est inférieure et immédiatement adjacente à ladite première portion, a une énergie suffisamment élevée pour que le signal sonore couvre l'audibilité par l'auditeur ou téléspectateur du son résultant du signal de données. Il apparait en effet que la sensibilité de l'oreille humaine à des sons d'une bande de fréquence donnée dépend, en outre, de l'ambiance sonore existante pour une bande de fréquence inférieure et immédiatement adjacente à la bande de fréquence donnée. Plus l'énergie dans la bande de fréquence inférieure est élevée, plus l'oreille est insensible à des fréquences de la bande de fréquence donnée, et inversement.

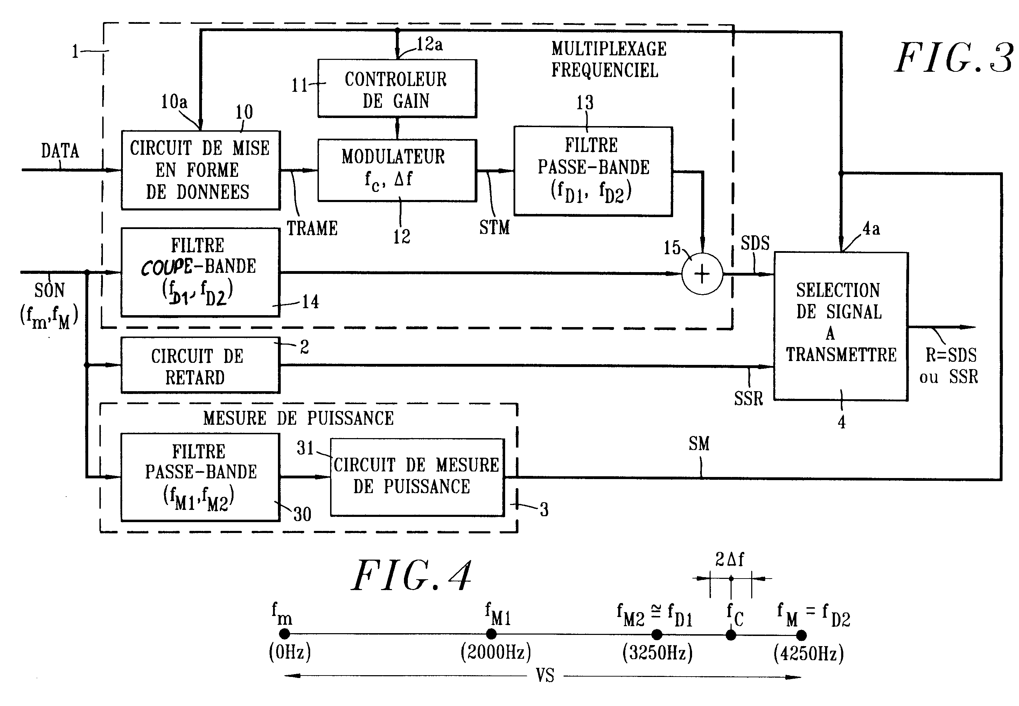

Le dispositif de multiplexage fréquentiel montré à la figure 3 résulte de cette considération sur la sensibilité auditive de l'oreille humaine. Il comprend un circuit de multiplexage 1 pour multiplexer fréquentiellement un signal numérique de données DATA avec un signal analogique sonore SON, un circuit de retard 2, une unité de mesure de puissance spectrale 3, et un circuit de sélection de signal à transmettre 4.

En référence à la figure 4, il est supposé pour la description ci-après du dispositif de multiplexage, que le signal sonore occupe la bande de fréquence sonore (fₘ ; f_{M}), supposée ici égale à (0 Hz ; 4250 Hz). Une première portion (f_{D1} ; f_{D2}) de la bande de fréquence sonore est allouée à la transmission du signal de données DATA et est typiquement comprise entre f_{D1} = 3250 H2 et f_{D2} = 4250 Hz. Dans une seconde portion (f_{M1} ; f_{M2}) de la bande de fréquence sonore est mesuré un niveau de puissance qui conditionne la transmission du signal de données DATA . On notera que la borne supérieure f_{D2} de la première portion (f_{D1} ; f_{D2}) allouée au signal de données coïncide avec la borne supérieure f_{M} de la bande de fréquence sonore (fₘ ; f_{M}). En accord avec la propriété précitée de sensibilité de l'oreille humaine, la borne supérieure f_{M2} de la seconde portion (f_{M1} ; f_{M2}) de la bande de fréquence sonore coïncide sensiblement avec la borne inférieure f_{D1} de la première portion (f_{D1} ; f_{D2}) de la bande de fréquence sonore allouée à la transmission du signal de données DATA. La fréquence inférieure f_{M1} de la seconde portion de bande qui est typiquement égale à 2000 Hz, peut être plus faible, voire égale à fₘ.

Le circuit de multiplexage fréquentiel 1 comprend un circuit de mise en forme de données 10 recevant le signal numérique de données DATA, un contrôleur de gain 11, un modulateur de fréquence 12, un filtre passe-bande 13, un filtre coupe-bande 14 recevant le signal analogique sonore SON et un additionneur 15.

Sachant que le signal de données DATA n'est transmis dans la première portion (f_{D1} ; f_{D2}) de la bande de fréquence sonore que lorsque le niveau de puissance dans la seconde portion (f_{M1} ; f_{M2}) de la bande de fréquence sonore est suffisamment élevé, et donc sachant que le signal de données DATA ne peut être transmis en continu, il est nécessaire d'adopter une transmission du signal de données DATA qui est asynchrone. La mise en forme du signal de données DATA dans le circuit 10 consiste de préférence à grouper les bits du signal DATA en des blocs à N bits écrits au fur et à mesure de leur arrivée dans une mémoire tampon, N étant un entier typiquement égal à 32, et à lire les blocs dans la mémoire tampon de manière à les empaqueter sous forme de trames de bloc. Chaque trame comprend un mot de début de trame et un mot de fin de trame qui ont chacun N bits prédéterminés respectifs et qui soit encadrent un ou plusieurs blocs de données, soit sont consécutifs en fonction du niveau de puissance mesuré dans l'unité 3.

Typiquement, le débit réel des bits des trames est de 500 bit/s, chaque bloc ayant une durée de 64 ms, et le débit utile du signal DATA est donc inférieur à 500 bit/s.

Les trames TRAME résultantes de la mise en forme sont appliquées à une entrée du modulateur de fréquence 12 opérant une modulation série bivalente par déplacement de fréquence. Le modulateur produit un signal de trame modulé STM constitué par l'un de deux signaux de modulation ayant des fréquences respectives (f_{c} + Δf) et (f_{c} - Δf) sélectionnés en fonction des états "1" et "0" des bits reçus dans le signal de trame TRAME. La puissance du modulateur 12, et donc l'amplitude des deux signaux de modulation de fréquences (f_{c} ± Δf) est commandée par le contrôleur de gain 11, comme cela sera expliqué ultérieurement.

Comme montré dans la figure 4, la fréquence moyenne minimale de la modulation de fréquence correspond à une fréquence centrale f_{c} = (f_{D1} + f_{D2})/2 = 3750 Hz de la première portion de la bande de fréquence sonore (f_{D1} ; f_{D2}). Typiquement, Δf est égale à 125 Hz. Néanmoins, le filtre passe-bande 13 dont une entrée est connectée à une sortie du modulateur 12, filtre dans la bande (f_{D1} ; f_{D2}), pour rejeter toute composante fréquentielle hors de la première portion de la bande de fréquence sonore en sortie du filtre 13. Le filtre coupe-bande 14 coupe alors le signal analogique sonore SON dans une bande (f_{D1} ; f_{D2}) complémentaire à la bande de filtrage du filtre 13.

Dans la réalisation décrite ci-dessus et illustrée à la figure 3, il est supposé que la borne supérieure f_{D2} de la première portion de la bande de fréquence sonore allouée au signal de données DATA coïncide avec la borne supérieure f_{M} de la bande de fréquence sonore. Selon une autre réalisation, la première portion (f_{D1} ; f_{D2}) est une sous-bande quelconque comprise dans la bande de fréquence sonore (fₘ, f_{M}). Le filtre 14 est alors un filtre coupe-bande filtrant le signal analogique sonore SON dans les bandes de fréquence (fₘ ; f_{D1}) et (f_{D2} ; f_{M}) complémentaires à la première portion de bande de fréquence (f_{D1}, f_{D2}) dans la bande de fréquence sonore et rejetant la première portion de bande de fréquence.

L'additionneur 15 reçoit à une première entrée le signal de trame modulé STM filtré par le filtre 13 dans la bande de fréquence (f_{D1} ; f_{D2}), et à une seconde entrée le signal sonore SON filtré par le filtre 14 dans la bande complémentaire (fₘ , f_{D1}) selon la réalisation illustrée. Ainsi, l'additionneur 15 fournit un signal multiplex SDS dans lequel le signal de données DATA est multiplexé en fréquence au signal sonore SON. Le signal multiplex SDS est appliqué à une première entrée du circuit de sélection 4.

Le circuit de retard 2 retarde le signal sonore SON d'une durée égale au retard induit par le filtre 14 et l'additionneur 15 sur le signal sonore SON, pour produire un signal sonore retardé SSR appliqué à une seconde entrée du circuit de sélection 4 qui comprend un commutateur analogique.

L'unité de mesure de puissance spectrale 3 comprend un filtre passe-bande 30, filtrant dans la seconde portion de bande de fréquence (f_{M1} ; f_{M2}), en cascade avec un circuit de mesure de puissance spectrale 31. Le circuit de mesure de puissance spectrale 31 produit un signal de mesure SM appliqué à des entrées de commande respectives 10a, 11a et 4a des circuit de mise en forme 10, contrôleur de gain 11 et circuit de sélection 4. Le signal de mesure SM dépend à chaque instant linéairement de la puissance spectrale contenue dans la première portion (f_{M1} ; f_{M2}) de la bande de fréquence sonore (fₘ ; f_{M}).

Tant que le niveau du signal de mesure SM est inférieur à un seuil de puissance prédéterminée SP, le circuit de mise en forme 10 n'est pas activé, c'est-à-dire aucun bloc de données n'est lu dans la mémoire tampon du circuit 10, et le circuit 4 reproduit en sortie un signal analogique résultant R constitué par le signal sonore retardé SSR.

Lorsque le niveau du signal de mesure SM est supérieur audit seuil, le circuit de mise en forme 10 est activé pour fournir une trame et le circuit de sélection 4 reproduit en sortie comme signal résultant R le signal multiplex de données et son SDS.

Puisque, tant que le circuit de mise en forme 10 et le circuit de sélection 4 sont activés par le signal de mesure SM pour produire le signal SDS, des blocs de données sont lus continuellement dans la mémoire tampon afin de constituer un signal de trame modulé STM transmis dans la portion de bande (f_{D1} ; f_{D2}) des fréquences sonores, la puissance contenue dans la portion de bande de fréquence (f_{D1} ; f_{D2}) est selon l'invention modifiée instantanément en dépendance de la puissance instantanée mesurée dans la portion de bande (f_{M1} , f_{M2}). En effet, si la puissance contenue dans la portion de bande de fréquence (f_{M1} ; f_{M2}) diminue, respectivement augmente, au cours de la transmission de la trame, il convient de diminuer, respectivement augmenter, proportionnellement la puissance dans la bande de fréquence (f_{D1} , f_{D2}) allouée au signal de données DATA, afin d'une part d'éviter que les données transmises soient audibles par l'auditeur, et d'autre part de transmettre les données avec une puissance maximale pour faciliter la détection des données en réception. Ces objectifs sont atteints grâce à la commande en gain d'un amplificateur à gain variable inclut en sortie du modulateur 12, à travers le contrôleur de gain 11, par le signal de mesure SM produit par l'unité de mesure de puissance 3.

En réponse à une transition descendante du signal de mesure SM d'un niveau supérieur à un niveau inférieur au seuil de puissance prédéterminé SP, lors d'une transmission du signal multiplex SDS, le circuit de mise en forme 10 est maintenu momentanément actif pour, d'une part, finir la transmission du bloc en cours de lecture, qui peut être un bloc de données ou le mot de début de trame, puis, d'autre part, transmettre le mot de fin de trame de manière à signaler en réception l'arrêt momentané de la transmission de données DATA.

Le dispositif de multiplexage fréquentiel est installé dans une régie finale de radio ou télévision ou dans une station de production, c'est-à-dire en référence à la figure 2, intervient au niveau de l'étape ET1, en amont des systèmes de radiodiffusion ou télédiffusion ou systèmes d'enregistrement de vidéocassettes.

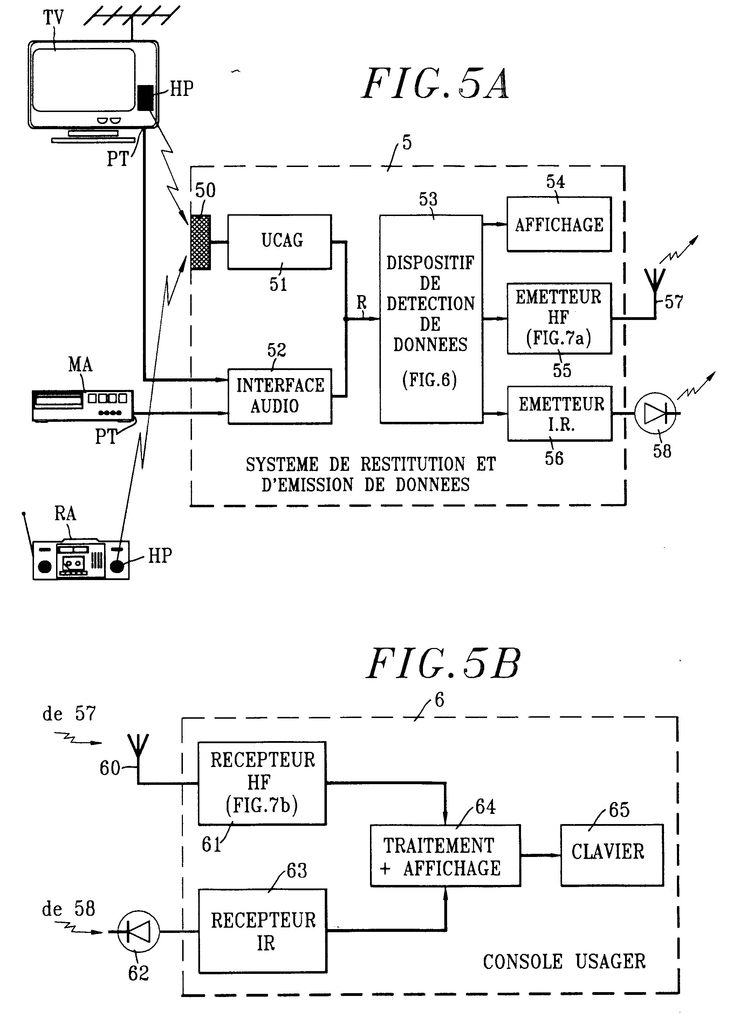

En référence aux figures 5A et 5B sont maintenant décrits un dispositif de restitution et une console d'usager installés chez un auditeur ou un téléspectateur.

Comme montré dans la figure 5A, le signal résultant R, composé du signal sonore SON multiplexé en fréquence ou non avec le signal de données DATA, est, selon une première variante, diffusé par voie hertzienne et reçu, à travers une antenne, par un poste de radio RA ou un poste de télévision TV chez l'auditeur ou téléspectateur ou, selon une seconde variante, enregistré sur une bande de vidéocassette et lu dans un magnétoscope MA. En réponse, des haut-parleurs HP du poste de télévision TV ou poste de radio RA diffusent acoustiquement ce signal résultant R, ou deux broches de la prise de péritélévision PT du poste de télévision TV ou du magnétoscope MA reproduisent en bande de base ce signal résultant R. Pour traiter ce signal résultant est prévu chez l'auditeur ou le téléspectateur, un système de restitution et d'émission de données 5 comprenant un transducteur acousto-électrique sous la forme d'un microphone 50, une unité d'amplification à commande automatique de gain (CAG) 51, une interface audio 52, un dispositif de détection de données 53, une unité d'affichage 54, et un émetteur à haute fréquence (HF) 55 relié à une antenne 57 ou un émetteur infrarouge 56 relié à un photoémetteur 58 tel que diode électroluminescente LED.

Le dispositif de détection de données 53 reçoit le signal électrique résultant R à travers le microphone 50 en série avec l'unité d'amplification à commande automatique de gain 51, selon la première variante relative à la diffusion acoustique par haut-parleur HP, et à travers l'interface audio 52 selon la seconde variante concernant l'enregistrement sur bande de vidéocassette ou la diffusion par la prise de péritélévision PT. L'unité 51 amplifie le signal acoustique capté par le microphone 50, qui est de préférence placé contre la grille d'un haut-parleur HP du poste, pour garantir un niveau de puissance moyenne constant au signal sonore multiplex en sortie de l'ensemble unité d'amplification 51 - microphone 50, indépendamment du volume sonore variable en sortie du haut-parleur HP choisi par l'auditeur ou le téléspectateur. Selon une autre variante, l'interface audio 52 recupère la bande de fréquence (fₘ ; f_{M}) relative au son, typiquement centrée sur la fréquence de porteuse sonore PS (figure 1) ramenée en bande de base, en un signal en bande de base transmis par le magnétoscope ou deux broches de la prise de péritélévision PT.

Le dispositif de détection de données 53 est destiné essentiellement à détecter, c'est-à-dire "récupérer" les trames de données TRAME transmises sous forme multiplexée avec le signal sonore SON lorsque le signal SDS est sélectionné en le signal R par le circuit de sélection 4 (figure 3), et optionnellement d'afficher ces trames de données sous forme de messages dans l'unité 54 et/ou de les réémettre vers une console de simulation d'interactivité 6 détaillée ultérieurement en référence à la figure 5B. En référence à la figure 6, le dispositif 53 comprend successivement depuis une entrée reliée à l'unité 51 et à l'interface 52 un filtre passe-bande 530, un démodulateur de fréquence 531, un circuit d'échantillonnage 532 et un circuit d'identification de mots 534. Un circuit de récupération d'horloge 533 est connecté entre une sortie d'horloge SH du démodulateur de fréquence 531 et une entrée d'horloge EH du circuit d'échantillonnage 532.

Le signal électrique résultant R reçu de l'unité 51 ou de l'interface 52 est appliqué à une entrée du filtre passe-bande 530 filtrant dans la bande de fréquence (f_{D1} ; f_{D2}) réservée au signal de données DATA. Cette bande de fréquence (f_{D1} ; f_{D2}) contient ou bien le signal sonore SON lorsque R = SSR ou bien le signal de données DATA lorsque R = SDS, en fonction de la sélection opérée par le circuit de sélection 4 dans le dispositif de multiplexage fréquentiel selon l'invention (figure 3). Le signal résultant filtré par le filtre 530 est appliqué à une entrée du démodulateur 531, du type à boucle de verrouillage de phase du second ordre, qui extrait par démodulation bivalente aux fréquences (f_{c}+ Δf) et (f_{c} - Δf) l'information numérique contenue dans la bande de fréquence (f_{D1} ; f_{D2}). Cette information numérique est utilisée dans le circuit de récupération d'horloge 533 pour récupérer un signal d'horloge au débit binaire typiquement de 500 bit/s appliqué à l'entrée d'horloge EH du circuit 532. L'information numérique est échantillonnée au débit de transmission des données dans le circuit d'échantillonnage 532. Le circuit d'échantillonnage 532 restitue les trames TRAME du signal de données DATA dans la mesure où de l'information numérique est délivré par le démodulateur 531 et par conséquent la bande de fréquence (f_{D1} ; f_{D2}) contient le signal de trame TRAME.

Le circuit d'identification de mots 534 identifie et supprime les mots de début et de fin de trame encadrant les trames restituées, et reproduit en sortie les blocs de données dans les trames restituées. En revenant à la figure 5A, les blocs de données des trames restituées sont alors, selon une première variante, affichés sous forme de messages dans l'unité d'affichage 54 pour fournir des informations supplémentaires à l'auditeur ou le téléspectateur, telles que type de programme, titre et auteur d'une mélodie...etc.. Selon une seconde variante, les blocs des données des trames restituées sont réémis par voie radio par l'émetteur HF 55 à travers l'antenne 57 ou par voie infrarouge par l'émetteur infrarouge 56 à travers le photoémetteur 58.

Les données sont réémises dans le cas où l'auditeur ou le téléspectateur dispose d'une console typiquement dans une application de simulation d'interactivité, par contraste avec l'affichage de données supplémentaires réalisé par l'unité 54.

En référence à la figure 5B, la console 6 comprend une antenne 60 reliée à un récepteur à haute-fréquence (HF) 61, ou un élément photorécepteur 62, tel que phototransistor, relié à un récepteur infrarouge 63, en dépendance du type de circuit émetteur HF 55-57 ou infrarouge 56-58 inclus dans le système de restitution et d'émission de données 5, ainsi qu'une unité de traitement et d'affichage 64 et un clavier 65. Les blocs de données reçus à travers le récepteur 61 ou 63 sont fournis à l'unité 64. Comme expliqué dans le préambule de la description, la simulation d'une interactivité entre l'auditeur ou le téléspectateur et le programme sonore ou audiovisuel consiste en un affichage de résultats dans un écran de l'unité 64 résultant d'une comparaison entre des données DATA reçues qui étaient multiplexées au signal sonore SON dans le signal SDS et de "réponses" saisies par cet auditeur ou téléspectateur au clavier 65.

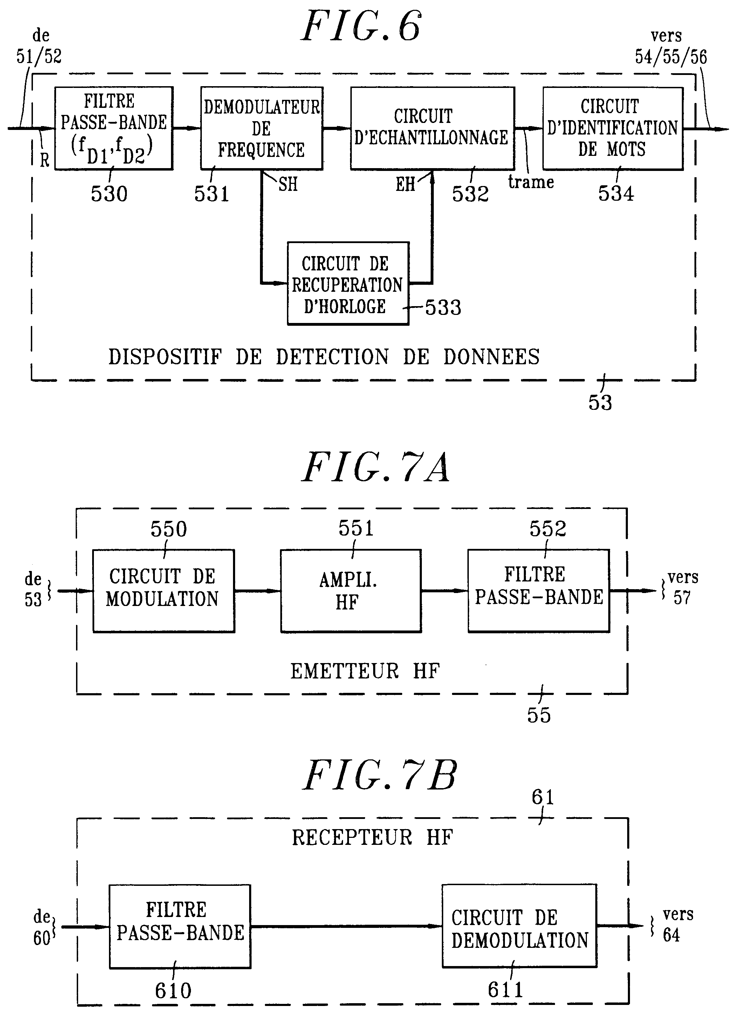

Les figures 7A et 7B montrent respectivement, à titre de réalisation pratique de la variante à haute-fréquence, l'émetteur 55 inclus dans le système de restitution et d'émission de données 5 et le récepteur 61 inclus dans la console d'usager 6.

L'émetteur à haute-fréquence 55 comprend un circuit de modulation 550, un amplificateur à haute-fréquence 551 et un filtre passe-bande 552 en cascade. Dans le circuit de modulation 550, les bits des blocs de données détectés par le dispositif 53 sont modulés par une porteuse en un signal de modulation dont la fréquence porteuse est une fréquence élevée, de l'ordre de la dizaine de MHz, typiquement égale à 27 MHz. Le signal de modulation de données ainsi transposé est ensuite amplifié dans l'amplificateur 551 puis filtré dans une bande de fréquence de transposition déterminée centrée sur la fréquence de porteuse transposée.

Le récepteur à haute-fréquence 61 comprend un filtre passe-bande 610 et un circuit de démodulation 611 en cascade. Le signal de données transmis par voie radio et reçu par l'antenne 60 de la console 6 est filtré par le filtre passe-bande 610 dans la bande de fréquence de transposition du circuit de modulation 550. Le circuit de démodulation transpose en bande de base le signal de données issu du filtre 610 puis le démodule sous forme de blocs de données.

Bien que l'invention soit décrite ci-dessus dans le domaine audiovisuel, celle-ci s'applique à tout premier signal, tel que le signal sonore, établi dans une bande de fréquence donnée, quelles que soient les valeurs limites de cette bande, lequel premier signal est transmis avec un second signal tel que le signal numérique de données, dont le spectre est inclus dans la bande de fréquence donnée et dont la puissance instantanée varie en dépendance de celle du premier signal.

La description ci-dessus a été limitée au multiplexage d'un signal de données DATA dans une seule sous-bande (f_{D1} ; f_{D2}), dite première portion, de la bande de fréquence sonore (fₘ ; f_{M}). Le procédé selon l'invention vise néanmoins également le multiplexage fréquentiel d'un signal sonore SON établi dans une bande de fréquence donnée et d'un signal de données DATA établi dans une pluralité de premières portions distinctes, chacune incluse dans la bande de fréquence donnée. Dans ce cas, le multiplexage fréquentiel du signal de données DATA avec le signal sonore SON dans l'une de ladite pluralité des premières portions distinctes est opéré en fonction de la puissance mesurée dans l'une respective d'une pluralité de secondes portions respectivement complémentaires à la pluralité des premières portions dans la bande de fréquence donnée. L'utilisation de plusieurs premières portions, ou sous-bandes, pour la transmission du signal de données permet de multiplier en proportion le débit du signal de données DATA transmis par multiplexage dans ces premières portions.

## Revendications

**1 -** Dispositif de multiplexage fréquentiel recevant un signal sonore (SON) établi dans une bande de fréquence donnée (fₘ ; f_{M}) et un signal de données (DATA), comprenant
un filtre coupe-bande (14) pour filtrer ledit signal sonore (SON) dans une portion (fₘ ; f_{D1}) de ladite bande de fréquence donnée (fₘ ; f_{M}) complémentaire à une première portion (f_{D1} ; f_{D2}) dans ladite bande de fréquence donnée (fₘ ; f_{M}) de manière à fournir un signal sonore filtré,
un moyen de mesure (3) pour mesurer une puissance du signal sonore (SON) dans une seconde portion (f_{M1} ; f_{M2}) incluse dans la bande de fréquence donnée (fₘ ; f_{M}) et distincte de ladite première portion (f_{D1} ; f_{D2}) de manière à fournir un signal de mesure (SM) proportionnel à la puissance mesurée tant que la puissance mesurée est supérieure à un seuil,
un moyen de modulation (12, 13) commandé par ledit moyen de mesure (3) pour moduler en fréquence ledit signal de données (DATA) dans ladite première portion de bande de fréquence (f_{D1} ; f_{D2}), en réponse au signal de mesure (SM), et
un moyen (15) pour additionner le signal sonore filtré dans le filtre coupe-bande (14) et le signal de données modulé dans le moyen de modulation (12, 13) en un signal multiplex (SDS),
caractérisé en ce qu'il comprend
un moyen (4) commandé par le moyen de mesure (3) pour sélectionner et transmettre en tant que signal résultant (R), le signal multiplex (SDS) en réponse au signal de mesure (SM) et le signal sonore (SON,SSR) lorsque la puissance mesurée est inférieure audit seuil.

**2 -** Dispositif conforme à la revendication 1 comprenant , en outre,
un moyen (10) commandé par le moyen de mesure (3) pour mettre en forme ledit signal de données (DATA) en des trames de bit (TRAME) encadrées par des mots de début et de fin de trame sensiblement en réponse au signal de mesure (SM), chacune des trames ayant une durée sensiblement égale à la différence entre deux instants successifs entre lesquels la puissance mesurée (SM) est supérieure au seuil,
et
un moyen de contrôle de gain (11) commandé par le moyen de mesure (3) pour faire varier la puissance instantanée des trames à moduler en fréquence dans le moyen de modulation (12, 13) en proportion du niveau du signal de mesure (SM).

**3 -** Dispositif conforme à la revendication 1 ou 2, caractérisé en ce que ledit moyen de mesure (3) comprend
un moyen (30) pour filtrer ledit signal sonore dans ladite seconde portion (f_{M1} ; f_{M2}) de la bande de fréquence donnée (fₘ ; f_{M}), et
un moyen (31) pour mesurer la puissance spectrale instantanée dudit signal sonore filtré dans ladite seconde portion de bande de fréquence (f_{M1} ; f_{M2}).

**4 -** Système (5) pour restituer des données (DATA) incluses dans un signal résultant diffusé acoustiquement (R) produit par un dispositif de multiplexage fréquentiel conforme à l'une quelconque des revendications 1 à 3, caractérisé en ce qu'il comprend :
un moyen acousto-électrique (50) pour transformer ledit signal résultant diffusé acoustiquement en un signal électrique résultant, et
un moyen (53) pour détecter ledit signal de données dans ledit signal électrique résultant afin d'en extraire des données restituées.

**5 -** Système conforme à la revendication 4, comprenant un moyen d'amplification à commande automatique de gain (51) associé au moyen acousto-électrique (50) et précédant le moyen pour détecter (53).

**6 -** Système (5) pour restituer des données dans un signal résultant (R) produit par un dispositif de multiplexage fréquentiel conforme à l'une quelconque des revendications 1 à 3, et associé à un signal d'image en un signal audiovisuel capté par un moyen récepteur (TV, MA), caractérisé en ce qu'il comprend:
un moyen (PT,52) pour récupérer un signal sonore contenu dans le signal audiovisuel capté et reproduit en bande de base (PT) par le moyen récepteur (TV, MA) en le signal résultant (R), et
un moyen (53) pour détecter ledit signal de données dans le signal résultant récupéré afin d'en extraire des données restituées.

**7 -** Console (6) reliée par voie radio (55, 57, 60, 61) ou voie infrarouge (56, 58, 62, 63) à un système conforme à l'une quelconque des revendications 4 à 6, pour recevoir les données restituées, caractérisée en ce qu'elle comprend :
un clavier (65) pour saisir des réponses d'usager, et
une unité de traitement et d'affichage (64) pour comparer les réponses saisies et les données restituées reçues, et afficher des résultats de comparaison entre réponses et données.
